# EUROPEAN PATENT APPLICATION

(11) **EP 1 998 466 A1**
(43) Date of publication of application: **03.12.2008**
(21) Application number: 07010647.1
(22) Date of filing: 29.05.2007
(51) Int. Cl.: H04B 3/46

(54) **Method and device for processing data and communication system comprising such device**

(71) Applicant: Nokia Siemens Networks Oy, 02610 Espoo (FI)
(72) Inventor: Zirwas, Wolfgang, 81249 München (DE)
(74) Representative: Bruglachner, Thomas E.

(57) **Abstract**

A method and a device for data processing are provided the method comprising the steps of (i) data is sent from a first network component to an at least one second network component via at least two lines; and (ii) the first network component transmits a measurement tag via at least one line of the at least two lines.

## Description

The invention relates to a method and to a device for processing data and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52Mbit/s in downstream - 12Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

VDSL2 is designed to support the wide deployment of Triple Play services such as voice, video, data, high definition television (HDTV) and interactive gaming. VDSL2 enables operators and carriers to gradually, flexibly, and cost efficiently upgrade existing xDSL infrastructure.

ITU-T G.993.2 (VDSL2) is an enhancement to G.993.1 (VDSL) that permits the transmission of asymmetric and symmetric (full duplex) aggregate data rates up to 200Mbit/s on twisted pairs using a bandwidth up to 30MHz.

The xDSL wide band modulation approaches are problematic relating to crosstalk interference that is introduced to the twisted pair transmission line and received by the modem.

Crosstalk occurs when wires are coupled, in particular between wire pairs of the same or a nearby bundle that are used for separate signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone lines in the same and/or a nearby multi-core cable or bundle. With an increasing transmission speed, this problem even deteriorates, which may significantly limit a maximum data rate to be transmitted via a single line.

In particular, a typical VDSL system supports up to 50 customer premises equipments (CPEs) over one single cable which leads to a crosstalk channel matrix, e.g., of a size 50x50, thereby causing a significant processing effort.

Existing solutions propose pilot or preamble symbols to be used, which are known to both the transmitting side as well as to the receiving side. For the measurement of crosstalk or interference all but one radio channel needs to be quiet. Hence, protocol overhead for channel estimation is required, especially if regular updates of the radio channel are needed.

The problem to be solved is to overcome the disadvantages as mentioned before and to provide an approach to allow a substantially seamless measurement procedure of crosstalk and/or interference.

This problem is solved according to the features of the independent claims. Further embodiments result from the depending claims.

In order to overcome this problem, a method for data processing is provided comprising the steps:
- data is sent from a first network component to an at least one second network component via at least two lines,
- the first network component transmits a measurement tag via at least one line of the at least two lines.

Such measurement tag may be transmitted to the at least one second network component, in particular via the at least two lines and it can be used for measurement of crosstalk and/or interference purposes.

Advantageously, the measurement tag is initiated by the first network component and lasts for a predetermined time interval during which data of low/reduced power or no data at all is transmitted. Hence, crosstalk influence can be detected during such an interval on the respective line, because the line itself does not carry a signal itself (or it carries a signal of reduced power only).

One particular advantage of this approach is that an estimation of all frequency selective cable channels and in particular of crosstalk interference from each input line to each other output line of, e.g., a multi-core cable, can be achieved with considerable high accuracy as well as low protocol overhead.

In an embodiment, the at least one second network component is informed about the measurement tag by the first network component. Preferably, the at least one second network component may be informed about the position and/or size (duration) of the measurement tag.

Hence, the first network component tells the at least one second network component when (and where within a transmission frame) the measurement tag is to be expected. This allows the at least one second network component to send back a measurement feedback to the first network component, such measurement feedback comprising a result of a measurement and/or monitoring processed during the measurement tag interval.

In another embodiment, the measurement tag is transmitted at a predefined position.

In case such measurement tag is transmitted by the first network component at a predefined position within a transmission frame (and preferably for a predetermined duration), the at least one second network component does not have to be explicitly informed about this position, e.g., at the beginning of each transmission frame. Instead, the position (and duration) of the measurement tag could be provided to the at least second network component beforehand such that the first network component may just use this position as pre-defined and the at least second network component measures crosstalk and/or interference at this position and sends the measured data back to the first network component.

In a further embodiment, the measurement tag is a gap of a predetermined size.

The measurement tag may in particular comprise an interval of a predetermined duration. Such blanking interval can be used for measurement purposes, e.g. to detect interference and/or crosstalk over the respective line.

In a next embodiment, the measurement tag is sent via all but one line.

Preferably, the line via which no measurement tag is conveyed can be used to send a predetermined signal and the remaining lines measure at the time such signal is sent (which preferably is substantially identical to the time interval of the measurement tag) crosstalk and/or interference generated by this signal to its adjacent lines. If the all but one lines are not carrying a signal at time of the measurement tag, only crosstalk and/or interference can be detected and, upon measurement, values can be sent back to the first network component. These values fed to the first network component can be used to evaluate a suitable pre-coding for reducing such crosstalk and/or interference at the first network component.

It is also an embodiment that any data lost during the time interval the measurement tag is provided can be corrected by fault error correction (FEC) at the receiving side.

Preferably, the duration of the measurement tag (e.g., a time gap) is selected such that fault error correction means provided are still capable of compensating such a blanking interval.

Pursuant to another embodiment, the measurement tag is associated with a modulation level that may be reduced compared to the modulation level beyond the measurement tag interval.

Advantageously, it is not necessary to provide a gap causing total quiet during the measurement tag interval. Clearly a full quiet gap would cause total data loss during the duration of such gap. To avoid this and to provide a reduced amount of data during the measurement tag interval, data can be transmitted with a reduced power, in particular at a lower modulation level.

For example, a high-level quadrature amplitude modulation such as 64QAM may be reduced to 16QAM with a reduced amplitude thereby still conveying data (even during the measurement tag), but also being able to detect and identify crosstalk and/or interference during such interval of the measurement tag.

Alternatively, a data transmission of an increased power but utilizing the same (QAM) constellations may be applicable in order to evaluate crosstalk with little or without any loss of data. This power enhancement could be utilized for particular subcarriers only.

According to an embodiment, the modulation of the reduced level is a modulation utilizing a limited number of constellations.

Hence, a reduced QAM-level leads to a limited number of constellations (symbols is the complex QAM plane) that may be easily separated from disturbances due to crosstalk and/or interference.

In another embodiment, a constellation diagram may be adaptively reduced. In particular, symbols or constellation of the constellation diagram may be chosen accordingly. For example, after first evaluation(s) of the crosstalk and/or interference an amplitude of such crosstalk and/or interference is known between particular (adjacent) lines. It may be assumed that such amplitude is not about to change to a significant degree in between succeeding evaluations. For further measurements or evaluations, more or less bits may be transmitted via the respective line depending on the typical crosstalk and/or interference that can be received on said line.

Also it is an embodiment that a bitswapping mechanism is utilized transferring certain bits to subcarriers, in particular during an interval of the measurement tag. This preferably may apply instead of discarding these bits. Advantageously, if predetermined subcarriers are used, such bitswapping can be provided even without additional signaling, i.e. without additional protocol overhead.

According to another embodiment, the crosstalk interference is evaluated based on a signal received at the (time of the) measurement tag.

Such signal may be induced by the first network component over a line that does (at the same time) not comprise the measurement tag.

In yet another embodiment, such crosstalk and/or interference is processed, in particular reduced based on the crosstalk and/or interference evaluated (and fed back from the at least one second network component to the first network component).

According to a next embodiment, the crosstalk interference is reduced by the first network component by providing pre-coding mechanisms.

According to an embodiment, the first network component is a Central Office (CO) or a Digital Subscriber Line Access Multiplexer (DSLAM).

According to another embodiment, the at least one second network component is a customer-premises equipment (CPE).

The problem stated supra is also solved by a device for processing data comprising a processor unit that is equipped and/or arranged such that the method as described herein is executable on said processor unit.

In an embodiment, said device is a communication device, in particular a Central Office or a Digital Subscriber Line Access Multiplexer.

In another embodiment, the device comprises a pre-coding unit to run the method as described herein.

In a further embodiment, the device comprises a de-coding unit to run the method as described herein.

The problem is also solved by a communication system comprising a device as described herein.

Embodiments of the invention are shown and illustrated in the following figures:
- Fig.1: shows lines of a multi-core cable that may connect, e.g., a central office with customer-premises equipments, wherein measurement tags are provided at some lines in order to evaluate crosstalk and/or interference caused by at least one line without such measurement tag;
- Fig.2: shows a constellation diagram with small constellation points and large constellation points, wherein a mapping to one large constellation point still is feasible in case crosstalk and/or interference is within an interference range as presented;
- Fig.3: shows a scenario comprising a communication network allowing to send data from a server to a client in particular from a central office to a customer-premises equipment via an xDSL connection.

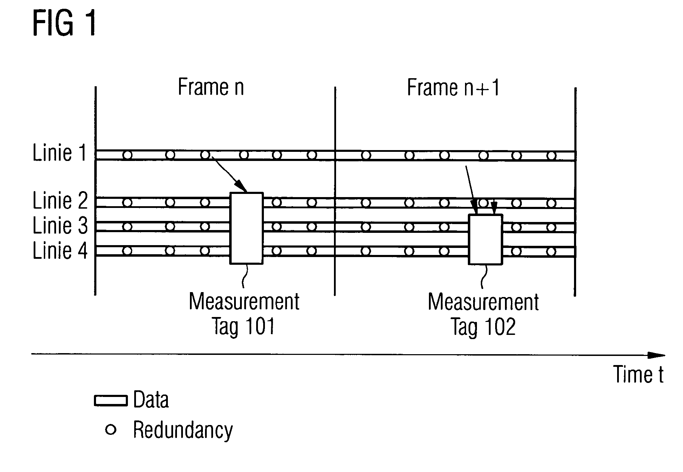

**Fig.1** shows a Frame n and a Frame n+1 that are transmitted during a Time t from a first network component to at least one second network component via different lines Line1, Line2, Line3 and Line4.

Preferably, the first network component is a Central Office or Digital Subscriber Line Access Multiplexer CO/DSLAM, the at least second network component may be several Customer-Premises Equipments, each connected to one of the lines Line1 to Line4.

The Central Office or Digital Subscriber Line Access Multiplexer CO/DSLAM and the several Customer-Premises Equipments may be connected via Line1 to Line4 by, e.g., a multi-core cable that may inflict crosstalk effects and/or interference to adjacent lines.

Via each line shown in Fig.1 data is transmitted comprising also redundancy information that can be used by a receiver to reconstruct the data conveyed in case of errors that may have occurred on a line during data transmission.

Fig.1 further comprises Measurement Tags 101 and 102 within the Frame n as well as within the Frame n+1. Such Measurement Tags 101 and 102 are used for measurement purposes, in particular for evaluating crosstalk and/or interference that may be added to the respective line.

However, such crosstalk and/or interference can be determined or measured if no user or idle data is transmitted during a time interval of the Measurement Tags 101 or 102. Hence, preferably the first network component does not send any (user or idle) data during such Measurement Tag intervals.

Alternatively, the first network component may send data of a reduced amplitude during said interval. This allows a (reduced) amount of data to be conveyed across the line during the measurement tag interval, but at the same time crosstalk and/or interference can still be detected.

As a further alternative, particular constellations may be chosen for data transmission during said measurement tag interval.

Advantageously, measurements of crosstalk and/or interference are processed preferably online, i.e. during active state and without interruption of an overall traffic. For this purpose, a small portion within a transmission frame, i.e. the Measurement Tags 101 and 102 are determined (preferably as "gaps"), during which preferably all but one line are quiet (see Frame n in Fig.1).

During such Measurement Tag 101, signals, e.g., predefined pilots, can be sent via the Line1. As an alternative, the data to be transmitted over this Line1 may actually be used as "pseudo pilots".

The at least one second instance, in particular each Customer-Premises Equipment CPE at the receiving side of each Line1 to Line4 sends feedback to the first network component, e.g., the Central Office CO, comprising information of the crosstalk and/or interference measured on the respective line caused by the signal and/or the predefined pilot and/or the actual data ("pseudo pilot" signals) during the interval of the Measurement Tag 101.

Based on such information provided by the Customer-Premises Equipment CPE, the Central Office CO is able to perform pre-coding in order to achieve a certain level of crosstalk and/or interference cancellation.

The redundancy information provided is used for fault error correction (FEC) purposes, i.e. to correct the errors that result in providing the Measurement Tags 101 and 102. Preferably, the data is temporarily stored in a memory for such fault error correction.

It is possible that the Measurement Tag 101 and/or the Measurement Tag 102 is/are at variable locations (at different times) within the respective transmission frames (Frame n, Frame n+1). Preferably, the receiving side is informed about the location (and/or time) the respective Measurement Tag 101 and 102 is to be expected. Then, such Measurement Tag (that may be realized as an interval carrying no data at all, i.e. a quiet time period) is used for monitoring interference and/or crosstalk on each line to which the Measurement Tag is applied.

As the Central Office (here acting as the first network component) is aware of the position of each Measurement Tag, it can arrange that all lines except for Line1 (see Frame n in Fig.1) are quiet during the interval of the Measurement Tag 101, which is realized as a "time gap".

Also, variable measurement positions can be realized by informing the receivers, e.g., at the beginning of a transmission frame about the position at which the next Measurement Tag can be expected. This allows the receiver (here the at least one second network component, i.e. the respective Customer-Premises Equipment CPE), during the Measurement Tag interval to monitor interference and/or crosstalk without any "disturbance" caused by user data and/or idle data and to send back such monitored information to the Central Office CO.

Further, fixed predefined measurement locations can be agreed on between the Central Office CO and the Customer-Premises Equipment CPE. Then, only once an announcement to all Customer-Premises Equipments is required to initiate the measurement procedure.

Despite of the Measurement Tags 101 and 102 generated by the Central Office CO, the respective Customer-Premises Equipment CPE at the end of the respective line preferably is able to fully reconstruct the transmitted data due to redundancy information provided by fault error correction FEC means. This applies in particular for large data packets with large interleaver sizes. In case of Measurement Tags of small interval length in relation to the full FEC-encoded data packet, the block error rate (BLER) probability will increase only slightly and can be handled by suitable automatic repeat request (ARQ) mechanisms. The FEC decoder may have to consider the knowledge of the position of the Measurement Tag, which can be realized, e.g., by providing such information to the decoder itself.

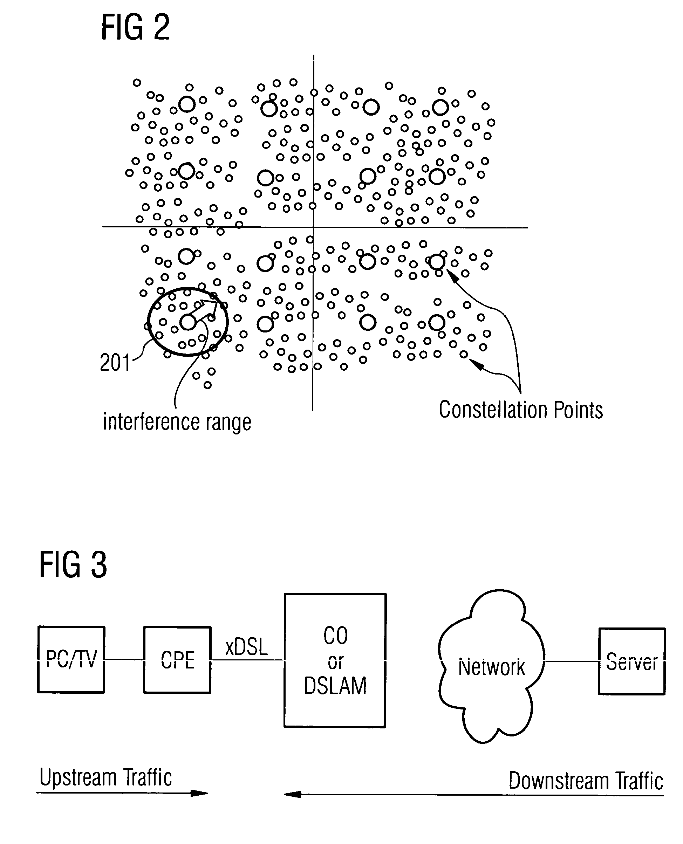

In order to improve performance, the number of bits affected by the Measurement Tag have to be minimized. Regarding ADSL systems, high modulation rates with a lot of constellations are used, e.g., at one subcarrier of one symbol up to 18 bits may be transmitted. In such scenario, a performance degradation is considerably high, even if the Measurement Tag extends to a single symbol length only. Hence, instead of a gap without any data transmission utilized as the Measurement Tag, a more robust sub-constellation within a constellation plane may be used as shown in **Fig.2**.

In Fig.2 the complex plane of symbols is shown comprising small points and large points, both representing constellations in said plane.

The small points indicate the full constellation diagram while the large points may indicate constellations that are used during the Measurement Tag interval.

Advantageously, crosstalk in DSL systems is considerable small, i.e. an interference based on crosstalk effects leads to a small area 201 around each large constellation point. Hence, it is possible to, e.g., transmit 12 bits out of 18 bits so that only 6 bits out of 18 bits are lost during the Measurement Tag interval.

The channel estimation is available after subtraction of the transmitted large constellation point, which is available after successful decoding.

Advantageously, such subtraction can be performed at the receiving side. This may reduce the length of the vector that has to be fed back to the Central Office CO.

Instead of discarding the above mentioned bits, such bits might be swapped (pursuant to mechanisms utilizing bitswapping) during measurement to other subcarriers. In case predefined subcarriers are used, this can be done even without additional signaling, i.e. without additional protocol overhead.

As a further improvement, the number of lines to which the Measurement Tag is applied may be reduced as shown in Fig.1 in the Frame n+1. As crosstalk from the Line1 to all other lines has already been evaluated/estimated at the end of Frame n, such knowledge about crosstalk and/or interference can be used at the Central Office. Hence, this Line1 can continue transmission during the next measurement gap as the resulting interference can be compensated either by pre-coding or by suitable correction after estimation. Thus, the line for which crosstalk has already been evaluated may stay active in a subsequent frame.

Such concept may be helpful depending on whether the crosstalk from other lines to the already measured line(s) has to be estimated as well. In case of symmetric crosstalk between lines, the crosstalk would have to be estimated only in one direction, i.e. from the Line1 to the Line2. The crosstalk from the Line2 to the Line1 would than just result to the same amount.

Particular advantages of the approach provided herewith can be summarized as follows:
a) The proposed approach allows measurement of crosstalk of an active and running system without interruption of data traffic.
   This allows measurements without significant degradation of data throughput. It can be used measuring at higher accuracy and result in a faster adaptation to time variant radio channels.
b) By using more robust constellation sizes instead of using a real gap as the Measurement Tag that would not allow transmission of data during its interval, a probability of frame errors is significantly reduced as the number of lost bits is minimized.
c) Further, the measurements can be provided with standard-compliant radio frames as used in xDSL systems.

A particular scenario of a communication network is shown in **Fig.3****.** Downstream Traffic is conveyed from the Server via a Network to a Central Office or Digital Subscriber Line Access Multiplexer CO/DSLAM. The CO/DSLAM is further connected via a digital subscriber line xDSL to a Customer-Premises Equipment CPE. The digital subscriber line connection can be in particular of the following type:
- Asymmetric Digital Subscriber Line ADSL, ADSL2, ADSL2+;
- High Data Rate Digital Subscriber Line HDSL;
- Very High Speed Digital Subscriber Line VDSL, VDSL2.

The customer can be connected to the Customer-Premises Equipment CPE via a set-top box and a television or via a personal computer PC/TV. Data that is sent from the PC/TV towards the Server is referred to as Upstream Traffic.

Preferably, an operator or provider wants to efficiently use the xDSL downstream direction from the CO/DSLAM to the CPE by employing high data rate with low crosstalk effects.

## Claims

1. A method for data processing comprising the steps:
- data is sent from a first network component to an at least one second network component via at least two lines,
- the first network component transmits a measurement tag via at least one line of the at least two lines.

2. The method according to claim 1, wherein the at least one second network component is informed about the measurement tag by the first network component.

3. The method according to any of the preceding claims, wherein the at least one second network component is informed about the position of the measurement tag by the first network component.

4. The method according to any of the preceding claims, wherein the measurement tag is transmitted at a predefined position.

5. The method according to any of the preceding claims, wherein the measurement tag is a gap of a predetermined size.

6. The method according to any of the preceding claims, wherein the measurement tag is sent via all but one lines.

7. The method according to any of the preceding claims, wherein data lost due to the measurement tag is corrected by a fault error correction.

8. The method according to any of the preceding claims, wherein the measurement tag is associated with a modulation of a reduced level.

9. The method according to claim 8, wherein the modulation of the reduced level is a modulation utilizing a limited number of constellations.

10. The method according to any of the claims 8 or 9, wherein a constellation diagram may be adaptively reduced.

11. The method according to any of the preceding claims, wherein a bitswapping mechanism is utilized transferring certain bits to other subcarriers, in particular during an interval of the measurement tag.

12. The method according to any of the preceding claims, wherein crosstalk and/or interference is evaluated based on a signal received at the measurement tag.

13. The method according to claim 12, wherein the crosstalk and/or interference is reduced based on the crosstalk and/or interference evaluated.

14. The method according to claim 13, wherein the crosstalk interference is reduced by the first network component by providing pre-coding mechanisms.

15. The method according to any of the preceding claims, wherein the first network component is a Central Office or a Digital Subscriber Line Access Multiplexer.

16. The method according to any of the preceding claims, wherein the at least one second network component is a customer-premises equipment.

17. A device for processing data comprising a processor unit that is arranged such that the method according of any of the preceding claims is executable on said processor.

18. The device according to claim 17, wherein said device is a communication device, in particular a Central Office or a Digital Subscriber Line Access Multiplexer.

19. The device according to any of claims 17 or 18, comprising a pre-coding unit to run the method according to any of claims 1 to 16.

20. The device according to any of claims 17 or 18, comprising a de-coding unit to run the method according to any of claims 1 to 16.

21. Communication system comprising the device according to any of claims 17 to 20.
